(19) Europäisches Patentamt
European Patent Office
Office européen des brevets

(11) **EP 3 244 044 B1**

(12) **EUROPÄISCHE PATENTSCHRIFT**

(45) Veröffentlichungstag und Bekanntmachung des Hinweises auf die Patenterteilung:
**22.07.2020   Patentblatt 2020/30**

(21) Anmeldenummer: **17000765.2**

(22) Anmeldetag: **04.05.2017**

(51) Int Cl.:
| | |
|---|---|
| *F02D 33/02* (2006.01) | *B60T 1/10* (2006.01) |
| *B60L 7/00* (2006.01) | *F02B 21/00* (2006.01) |
| *F02B 29/08* (2006.01) | *F02B 37/24* (2006.01) |
| *F02D 13/02* (2006.01) | *F02D 23/02* (2006.01) |
| *F02D 41/10* (2006.01) | *F02B 37/10* (2006.01) |
| *F02B 37/14* (2006.01) | *F02B 39/10* (2006.01) |
| *B60L 15/20* (2006.01) | *B60T 13/58* (2006.01) |
| *F16D 61/00* (2006.01) | *F02B 37/22* (2006.01) |
| *F02D 21/08* (2006.01) | |

(54) **VERFAHREN ZUM BETREIBEN EINER BRENNKRAFTMASCHINE, INSBESONDERE ALS ANTRIEBSEINRICHTUNG FÜR EIN FAHRZEUG**

METHOD FOR OPERATING A COMBUSTION ENGINE, IN PARTICULAR AS PROPULSION DEVICE FOR A VEHICLE

PROCÉDÉ DE FONCTIONNEMENT D'UN MOTEUR À COMBUSTION INTERNE, EN PARTICULIER EN TANT QUE DISPOSITIF D'ENTRAÎNEMENT POUR UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.05.2016   DE 102016005877**

(43) Veröffentlichungstag der Anmeldung:
**15.11.2017   Patentblatt 2017/46**

(73) Patentinhaber: **MAN Truck & Bus SE
80995 München (DE)**

(72) Erfinder: **WEISS, Joachim
90522 Oberasbach (DE)**

(74) Vertreter: **Liebl, Thomas
Neubauer - Liebl - Bierschneider - Massinger
Münchener Straße 49
85051 Ingolstadt (DE)**

(56) Entgegenhaltungen:
| | |
|---|---|
| **EP-A1- 2 006 516** | **EP-A1- 2 940 269** |
| **EP-A2- 2 009 264** | **DE-A1- 10 239 110** |
| **DE-A1-102006 034 825** | **DE-A1-102007 027 968** |
| **DE-A1-102011 122 442** | **DE-A1-102014 221 331** |
| **US-A1- 2007 277 793** | **US-A1- 2012 312 014** |

**Beschreibung**

Die Erfindung betrifft ein Verfahren zum Betreiben einer Brennkraftmaschine eine Vorrichtung mit einer Brennkraftmaschine sowie ein Fahrzeug, insbesondere ein Nutzfahrzeug, mit der Vorrichtung.

Es ist bekannt, an einem mit einer Brennkraftmaschine angetriebenen Fahrzeug eine Energie-Speichereinrichtung vorzusehen, mittels der durch die Brennkraftmaschine oder das Fahrzeug erzeugte Energie zwischengespeichert wird, die dann in bestimmten Betriebsphasen der Brennkraftmaschine zur Verdichtung einer durch einen Ansaugtrakt der Brennkraftmaschine strömenden Verbrennungsluft verwendet wird. Die Energie-Speichereinrichtung kann dabei beispielsweise durch eine Batterie gebildet sein, mittels der, beispielsweise von einer Rekuperationsbremse des Fahrzeugs erzeugte, elektrische Energie zwischengespeichert wird. Zur Verdichtung der durch den Ansaugtrakt strömenden Verbrennungsluft kann mittels dieser zwischengespeicherten elektrischen Energie ein Elektromotor betrieben werden, mittels dem ein Verdichter eines Abgasturboladers der Brennkraftmaschine angetrieben wird. Diese zusätzliche Verdichtung der Verbrennungsluft bzw. Aufladung der Brennkraftmaschine wird für eine kurzzeitige Erhöhung der Brennkraftmaschinen-Leistung verwendet, um somit die Beschleunigung des Fahrzeugs, insbesondere bei einem Anfahrvorgang mit dem Fahrzeug, zu verbessern.

Aus der US 2012/312014 A1 ist zur Effizienzsteigerung bekannt, die Zuschaltung einer Aufladung lastabhängig zu steuern, und auch einen Einlassventil-Schließzeitpunkt lastabhängig zu steuern. Die Aufladeeinrichtung kann dabei mit einer Elektromaschine zusammenwirken. Die Steuerung von Aufladeeinrichtung und Einlassventil sind so überlagert.

Aufgabe der Erfindung ist es, ein Verfahren zum Betreiben einer Brennkraftmaschine sowie eine Vorrichtung mit einer Brennkraftmaschine bereitzustellen, mittels denen der Kraftstoffverbrauch der Brennkraftmaschine auf einfache und effektive Weise reduziert wird.

Diese Aufgabe wird gelöst mit den Merkmalen der unabhängigen Patentansprüche 1, 11 und 12. Bevorzugte Weiterbildungen sind in den Unteransprüchen offenbart.

Gemäß Patentanspruch 1 wird ein Verfahren zum Betreiben einer Brennkraftmaschine, insbesondere als Antriebseinrichtung für ein Fahrzeug, vorgeschlagen, wobei eine Energie-Speichereinrichtung vorgesehen ist, mittels der, insbesondere durch die Brennkraftmaschine und/oder durch ein die Brennkraftmaschine aufweisendes Fahrzeugs erzeugte, Energie gespeichert bzw. zwischengespeichert wird, wobei eine Steuereinrichtung vorgesehen ist, mittels der die gespeicherte Energie in Abhängigkeit von wenigstens einem Steuerungsparameter einer durch einen Ansaugtrakt der Brennkraftmaschine strömenden Verbrennungsluft zugeführt wird, so dass die durch den Ansaugtrakt strömende Verbrennungsluft verdichtet wird. Erfindungsgemäß ist eine Schließzeitpunkt-Stelleinrichtung vorgesehen, mittels der der Schließzeitpunkt des wenigstens einen Einlassventils der Brennkraftmaschine verstellt werden kann, wobei, sofern die Verbrennungsluft nicht mittels der zwischengespeicherten Energie verdichtet wird, mittels der Schließzeitpunkt-Stelleinrichtung ein Grundzyklus der Brennkraftmaschine eingestellt wird, in dem das wenigstens eine Einlassventil der Brennkraftmaschine in einem Kurbelwinkelbereich von 1° bis 40° Kurbelwinkel, insbesondere von 10° bis 40° Kurbelwinkel nach UT (unterer Totpunkt) schließt, wobei, sofern die Verbrennungsluft mittels der zwischengespeicherten Energie verdichtet wird, zur Erhöhung des Wirkungsgrads der Brennkraftmaschine mittels der Schließzeitpunkt-Stelleinrichtung ein Zyklus der Brennkraftmaschine eingestellt wird, in dem das wenigstens eine Einlassventil der Brennkraftmaschine im Vergleich zum Grundzyklus früher oder später schließt. Zusätzlich zu der Schließzeitpunkt-Stelleinrichtung kann eine Durchlassquerschnitt-Stelleinrichtung vorgesehen sein, mittels der der Durchlassquerschnitt einer Turbine eines Abgasturboladers der Brennkraftmaschine verstellt werden kann, wobei, sofern die Verbrennungsluft nicht mittels der zwischengespeicherten Energie verdichtet wird, mittels der Durchlassquerschnitt-Stelleinrichtung wenigstens ein definierter Grund-Durchlassquerschnitt der Turbine eingestellt wird, wobei, sofern die Verbrennungsluft mittels der zwischengespeicherten Energie verrichtet wird, insbesondere zur Erhöhung des Wirkungsgrads der Brennkraftmaschine mittels der Durchlassquerschnitt-Stelleinrichtung ein Durchlassquerschnitt der Turbine eingestellt wird, der in einem definiertem Maß größer ist als der Grund-Durchlassquerschnitt. Auf diese Weise wird der Kraftstoffverbrauch der Brennkraftmaschine effektiv reduziert, da beispielsweise im Falle des früheren oder späteren Schließens des wenigstens einen Einlassventils der Brennkraftmaschine durch die, insbesondere zusätzliche, Verdichtung der Verbrennungsluft mittels der zwischengespeicherten Energie weiterhin eine ausreichend hohe Zylinderfüllung erreicht wird, obwohl das wenigstens eine Einlassventil der Brennkraftmaschine im Vergleich zum Grundzyklus früher oder später schließt. Durch die relativ zur Verdichtung verlängerte Expansion wird der innere Motorwirkungsgrad erhöht, so dass der Kraftstoffverbrauch der Brennkraftmaschine verringert wird. Im Falle der Vergrößerung des Durchlassquerschnitts der Abgasturbine wird der Kraftstoffverbrauch der Brennkraftmaschine effektiv reduziert, da durch die Vergrößerung des Durchlassquerschnitts der Abgasturbine der Abgasdruck vor bzw. stromauf der Abgasturbine sinkt und sich somit die Ausschiebearbeit der Brennkraftmaschine verringert. Mittels dieser Maßnahmen kann der Kraftstoffverbrauch der Brennkraftmaschine zudem auch auf besonders einfache Weise reduziert werden, da an Brennkraftmaschinen häufig bereits eine Schließzeitpunkt-Stelleinrichtung und/oder eine Durchlassquerschnitt-Stelleinrichtung vorgesehen ist.

Somit lässt sich mit der zwischengespeicherten Energie neben einer guten Fahrdynamik auch eine Reduzierung des Kraftstoffverbrauchs erzielen. Effekte einer Hybridisierung können dabei ohne entsprechende Komponenten im Antriebsstrang realisiert werden. Außerdem kann durch die Verstellung des Einlassventil-Schließzeitpunkts in Richtung früh oder spät der Spitzendruck begrenzt werden, wodurch auch das maximale Motormoment unter Einhaltung einer Spitzendruckbegrenzung zeitweilig angehoben werden kann.

Bevorzugt ist es dabei, wenn die erfindungsgemäße Verfahrensführung nur in bestimmten Betriebssituationen der Brennkraftmaschine angewendet wird, beispielsweise wenn die erfindungsgemäße Verfahrensführung eine besonders hohe Effektivität bei der Reduzierung des Kraftstoffverbrauchs der Brennkraftmaschine aufweist. Vorzugsweise wird die erfindungsgemäße Verfahrensführung zudem angewendet, wenn sich die Brennkraftmaschine, insbesondere für einen definiert langen Zeitraum, in einem im Wesentlichen stationären bzw. unveränderten Betriebszustand befindet.

Erfindungsgemäß ist der wenigstens eine Steuerungsparameter durch die mittels der Energie-Speichereinrichtung gespeicherte Energiemenge gebildet, um die Verdichtung der durch den Ansaugtrakt strömenden Verbrennungsluft mittels der zwischengespeicherten Energie effektiv zu steuern.

Dabei ist vorgesehen, dass, sofern die mittels der Energie-Speichereinrichtung gespeicherte Energiemenge einen definierten Energiemengen-Grenzwert nicht überschreitet, die Verbrennungsluft nicht mittels der zwischengespeicherten Energie verdichtet wird. Sofern die mittels der Energie-Speichereinrichtung gespeicherte Energiemenge den definierten Energiemengen-Grenzwert überschreitet, wird die Verbrennungsluft dann mittels der zwischengespeicherten Energie verdichtet.

Zusätzlich zu der mittels der Energie-Speichereinrichtung gespeicherten Energiemenge kann der wenigstens eine Steuerungsparameter auch durch die aktuelle Drehzahl der Brennkraftmaschine und/oder durch das aktuelle Drehmoment der Brennkraftmaschine und/oder durch die mittels einer, insbesondere externen, Abgasrückführung der Brennkraftmaschine in den Ansaugtrakt rückgeführte Abgasmenge gebildet sein. Diese Parameter haben ebenfalls einen wesentlichen Einfluss auf die Effektivität der erfindungsgemäßen Verfahrensführung.

Sofern die Brennkraftmaschine als Antriebseinrichtung zum Antreiben eines Fahrzeugs ausgebildet ist, ist vorzugsweise eine Steigungs-Ermittlungseinrichtung vorgesehen, mittels der Steigung eines aktuell und/oder zukünftig mit dem Fahrzeug befahrenen Fahrstreckenabschnitts ermittelt werden kann. Zusätzlich ist dann der wenigstens eine Steuerungsparameter durch die ermittelte Steigung des aktuell und/oder zukünftig mit dem Fahrzeug befahrenen Fahrstreckenabschnitts gebildet. Die Steigung der Fahrstrecke hat ebenfalls einen wesentlichen Einfluss auf die Effektivität der erfindungsgemäßen Verfahrensführung. Beispielsweise kann vor einem vorausliegenden Gefälle der Fahrstrecke die Energie-Speichereinrichtung vollständig geleert bzw. die zwischengespeicherte Energie vollständig zur Verdichtung der durch den Ansaugtrakt strömenden Verbrennungsluft verwendet werden, wenn die Energie-Speichereinrichtung während der Bergabfahrt in dem Gefälle auf besonders energieeffiziente Weise wieder mit Energie aufgeladen werden kann. Eine derartige energieeffiziente Aufladung kann beispielsweise mittels einer Rekuperationsbremse erfolgen.

Erfindungsgemäß ist die mittels der Energie-Speichereinrichtung zwischengespeicherte Energie durch elektrische Energie gebildet. Bevorzugt ist die Energie-Speichereinrichtung dabei durch eine elektrische Batterie gebildet ist, um die Energie-Speichereinrichtung besonders einfach und zuverlässig auszubilden.

Vorzugsweise wird mittels der Energie-Speichereinrichtung durch eine Energie-Rückgewinnungseinrichtung rückgewonnene und/oder erzeugte, insbesondere elektrische, Energie zwischengespeichert. Auf diese Weise wird die Effizienz des erfindungsgemäßen Verfahrens deutlich erhöht. Bevorzugt ist dabei vorgesehen, dass die Energie-Rückgewinnungseinrichtung durch eine Rekuperationsbremse eines die Brennkraftmaschine aufweisenden Fahrzeugs gebildet ist.

Weiter erfindungsgemäß weist die Brennkraftmaschine einen Abgasturbolader auf, wobei mittels der Energie-Speichereinrichtung, insbesondere in Abhängigkeit von der aktuellen Betriebssituation der Brennkraftmaschine, zumindest ein Teil der Rotationsenergie einer Abgasturbine bzw. eines Turbinenrads des Abgasturboladers zwischengespeichert wird. So kann die Energie-Speichereinrichtung einfach und effektiv aufgeladen werden. Für eine derartige Aufladung der Energie-Speichereinrichtung kann beispielsweise ein Wastegate der Abgasturbine in einer Betriebssituation der Brennkraftmaschine geschlossen bleiben, in der das Wastegate ansonsten geöffnet wird. Die im Bereich hoher Motorleistungen gegebenenfalls auftretende Überschussleistung, die durch das Öffnen des Wastegates vermieden worden wäre, kann dann beispielsweise durch elektrisches Bremsen genutzt werden, so dass elektrische Energie erzeugt wird. Entsprechend würde hier dann im Falle der Durchlassquerschnitt-Stelleinrichtung auch der Grund-Durchlassquerschnitt der Abgasturbine eingestellt bleiben. Alternativ könnte für eine derartige Aufladung der Energie-Speichereinrichtung das Wastegate auch gänzlich entfallen bzw. kein Wastegate an der Abgasturbine vorgesehen sein.

Erfindungsgemäß ist vorgesehen, dass zwischen der Abgasturbine und der Energie-Speichereinrichtung eine Elektromaschine, insbesondere ein elektrischer Generator, zwischengeschaltet ist, mittels der die mechanische Rotationsenergie der Abgasturbine in elektrische Energie umgewandelt werden kann, wobei die elektrische Energie dann in der, insbesondere als Batterie ausgebildeten, Energie-Speichereinrichtung gespeichert wird. So kann die Rotationsenergie der Abgasturbine auf einfache und effektive Weise mittels der Energie-Speichereinrichtung zwischengespeichert werden.

Weiter bevorzugt weist die Brennkraftmaschine einen Abgasturbolader auf, wobei ein Verdichter des Abgasturboladers mittels der zwischengespeicherten Energie angetrieben werden kann. Auf diese Weise kann die durch den Ansaugtrakt der Brennkraftmaschine strömende Verbrennungsluft besonders einfach und gleichzeitig auch effektiv mittels der zwischengespeicherten Energie verdichtet werden. Bevorzugt ist dabei vorgesehen, dass die Steuereinrichtung zum Antreiben des Verdichters eine mittels der zwischengespeicherten elektrischen Energie betriebene Elektromaschine, insbesondere einen Elektromotor, aufweist, um den Verdichter auf besonders einfache Weise mittels der zwischengespeicherten Energie antreiben zu können.

In einer bevorzugten konkreten Ausgestaltung ist der Zyklus zur Erhöhung des Wirkungsgrads der Brennkraftmaschine durch einen Miller-Zyklus gebildet. Bevorzugt ist dabei vorgesehen, dass in dem Miller-Zyklus das wenigstens eine Einlassventil der Brennkraftmaschine in einem Kurbelwinkelbereich von 40° bis 5° Kurbelwinkel vor UT schließt, um den Wirkungsgrad der Brennkraftmaschine besonders effektiv zu erhöhen.

Alternativ kann der Zyklus zur Erhöhung des Wirkungsgrads der Brennkraftmaschine auch durch einen Atkinson-Zyklus gebildet sein. Bevorzugt ist dabei vorgesehen, dass in dem Atkinson-Zyklus das wenigstens eine Einlassventil der Brennkraftmaschine in einem Kurbelwinkelbereich von 50° bis 70° Kurbelwinkel nach UT schließt, um den Wirkungsgrad der Brennkraftmaschine effektiv zu erhöhen.

Vorzugsweise ist die Schließzeitpunkt-Stelleinrichtung durch eine Nockenverstellung und/oder durch eine Nockenwellenverstellung gebildet, um den Schließzeitpunkt des wenigstens einen Einlassventils der Brennkraftmaschine auf einfache und funktionssichere Weise verstellen zu können.

Weiter bevorzugt ist die Durchlassquerschnitt-Stelleinrichtung durch eine Einrichtung zur Verstellung einer Turbinengeometrie der Abgasturbine gebildet.

Zur Lösung der bereits genannten Aufgabe wird ferner die Vorrichtung gemäß Anspruch 11 vorgeschlagen.

Die sich durch die erfindungsgemäße Vorrichtung ergebenden Vorteile sind identisch mit den bereits gewürdigten Vorteilen der erfindungsgemäßen Verfahrensführung, so dass diese an dieser Stelle nicht wiederholt werden.

Des Weiteren wird auch ein Fahrzeug, insbesondere ein Nutzfahrzeug, mit der erfindungsgemäßen Vorrichtung beansprucht. Die sich hieraus ergebenden Vorteile sind ebenfalls identisch mit den bereits gewürdigten Vorteile der erfindungsgemäßen Verfahrensführung und werden hier ebenfalls nicht wiederholt.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:

Fig. 1    in einer Seitenansicht ein Fahrzeug mit der erfindungsgemäßen Vorrichtung;

Fig. 2    eine schematische Darstellung, anhand der der Aufbau der erfindungsgemäßen Vorrichtung erläutert wird;

Fig. 3    ein Diagramm, anhand dem die Funktionsweise der erfindungsgemäßen Verfahrensführung erläutert wird;

Fig. 4    ein Diagramm, anhand dem die Funktionsweise des erfindungsgemäßen Verfahrens erläutert wird;

Fig. 5    eine schematische Darstellung, anhand der der Ablauf des erfindungsgemäßen Verfahrens erläutert wird; und

Fig. 6    eine schematische Darstellung des Aufbaus eines nicht erfindungsgemäßen Beispiels.

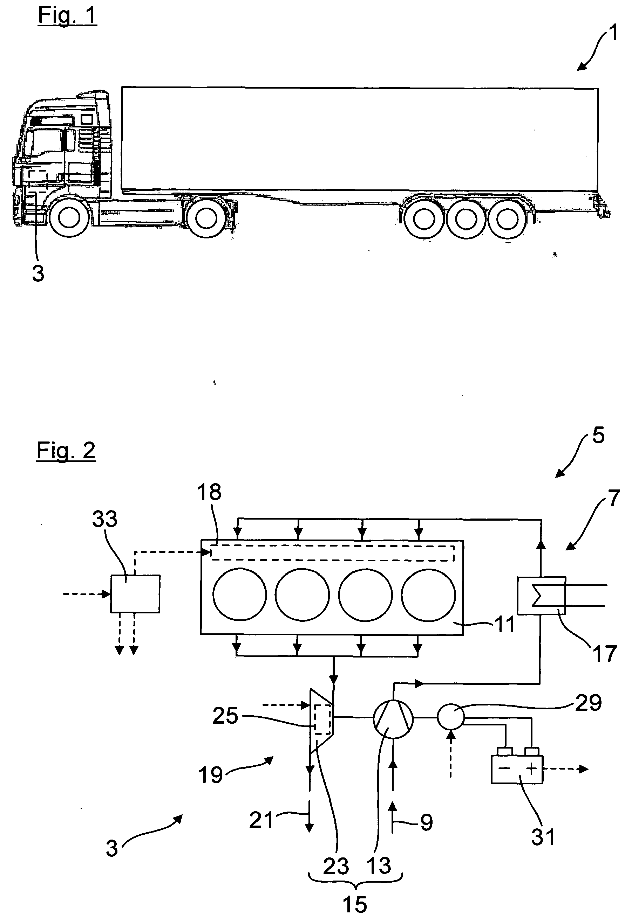

In Fig. 1 ist ein hier beispielhaft als Lastkraftwagen ausgebildetes Fahrzeug 1 mit einer mit gestrichelten Linien angedeuteten erfindungsgemäßen Vorrichtung 3 gezeigt. Der Aufbau der Vorrichtung 3 wird nachfolgend anhand der Fig. 2 näher erläutert:

Gemäß Fig. 2 weist die Vorrichtung 3 eine Brennkraftmaschine 5 auf, die die Antriebseinrichtung des Fahrzeugs 1 ausbildet. Die Brennkraftmaschine 5 weist hier einen Ansaugtrakt 7 auf, mittels dem Luft bzw. Verbrennungsluft 9 aus der Umgebung der Brennkraftmaschine 5 einem Zylinderkopf 11 der Brennkraftmaschine 5 zugeführt wird. Der Ansaugtrakt 7 weist hier beispielhaft, in Luft-Strömungsrichtung gesehen, einen Verdichter 13 eines Abgasturboladers 15 und einen wärmeabführenden Wärmeübertrager 17 auf. Mittels des Verdichters 13 wird die durch den Ansaugtrakt 7 strömende Verbrennungsluft 9 verdichtet. Anschließend wird die mittels des Verdichters 13 verdichtete Verbrennungsluft 9 mittels des wärmeabführenden Wärmeübertrages 17 gekühlt und dem Zylinderkopf 11 der Brennkraftmaschine 5 zugeführt. Zudem weist der Zylinderkopf 11 der Brennkraftmaschine 5 hier eine mit gestrichelten Linien angedeutete Schließzeitpunkt-Stelleinrichtung 18 auf, mittels der der Schließzeitpunkt der hier mehreren Einlassventile des Zylinderkopfs 11 verstellt werden kann. Die Schließzeitpunkt-Stelleinrichtung 18 kann beispielsweise durch eine Nockenwellenverstellung gebildet sein.

Weiter weist die Brennkraftmaschine 5 hier auch einen Abgasstrang 19 auf, über den Abgas 21 der Brennkraftmaschine 5 in die Fahrzeugumgebung geleitet wird. Der Abgasstrang 19 weist hier eine Turbine 23 des Abgasturboladers 15 auf, deren Turbinenrad von dem durch die Turbine 23 strömenden Abgas 21 angetrieben wird. Die Turbine 23 weist hier beispielhaft eine Fig. 2 mit gestrichelten Linien angedeutete Durchlassquerschnitt-Stelleinrichtung 25 auf, mittels der der Durchlassquerschnitt der Turbine 23 verstellt werden kann. Die Durchlassquerschnitt-Stelleinrichtung 25 ist hier beispielhaft durch eine Einrichtung zur Verstellung einer Turbinengeometrie der Turbine 23 gebildet.

Wie aus Fig. 2 weiter hervorgeht, weist die Vorrichtung 3 hier auch eine dreh-momentübertragend mit dem Abgasturbolader 15 verbundene Elektromaschine 29 auf, die hier sowohl in einer Generator-Betriebsweise als auch in einer Motor-Betriebsweise betrieben werden kann. In der Generator-Betriebsweise wird die Elektromaschine 29 von dem Abgasturbolader 15 angetrieben, so dass die mechanische Rotationsenergie der Abgasturbine 23 des Abgasturboladers 15 mittels der Elektromaschine 29 in elektrische Energie umgewandelt wird. Die mittels der Elektromaschine 29 erzeugte elektrische Energie wird dann in einer energieübertragend mit der Elektromaschine 29 verbundenen Batterie 31 als Energie-Speichereinrichtung gespeichert. In der Motor-Betriebsweise der Elektromaschine 29 wird der Verdichter 13 des Abgasturboladers 15 mittels der Elektromaschine 29 angetrieben. Die Elektromaschine 29 wird hier dann mittels der in der Batterie 31 gespeicherten bzw. zwischengespeicherten elektrischen Energie betrieben. Somit wird die durch den Ansaugtrakt 7 strömende Verbrennungsluft 9 hier mittels der in der Batterie 31 zwischengespeicherten elektrischen Energie verdichtet.

Gemäß Fig. 2 weist die Vorrichtung 3 hier weiter ein auch Steuergerät 33 auf, mittels dem hier beispielhaft die Durchlassquerschnitt-Stelleinrichtung 25, die Schließzeitpunkt-Stelleinrichtung 18 und die Elektromaschine 29 gesteuert werden. Die Schließzeitpunkt-Stelleinrichtung 18 wird hier dabei in Abhängigkeit von der aktuellen Betriebsweise der Elektromaschine 29 gesteuert. Sofern der Verdichter 13 des Abgasturboladers 15 dabei nicht mittels der Elektromaschine 29 angetrieben wird, wird mittels der Schließzeitpunkt-Stelleinrichtung 18 ein Grundzyklus der Brennkraftmaschine 5 eingestellt, in dem das wenigstens eine Einlassventil der Brennkraftmaschine 5 in einem Kurbelwinkelbereich von 1° bis 40° Kurbelwinkel, insbesondere von 10° bis 40° Kurbelwinkel, nach UT (unterer Totpunkt) schließt. Sofern der Verdichter 13 des Abgasturboladers 15 mittels der Elektromaschine 29 angetrieben wird, wird mittels der Schließzeitpunkt-Stelleinrichtung ein Zyklus der Brennkraftmaschine 5 eingestellt, in dem das wenigstens eine Einlassventil der Brennkraftmaschine 5 im Vergleich zum Grundzyklus früher oder später schließt. Dadurch kann der Wirkungsgrad der Brennkraftmaschine erhöht werden.

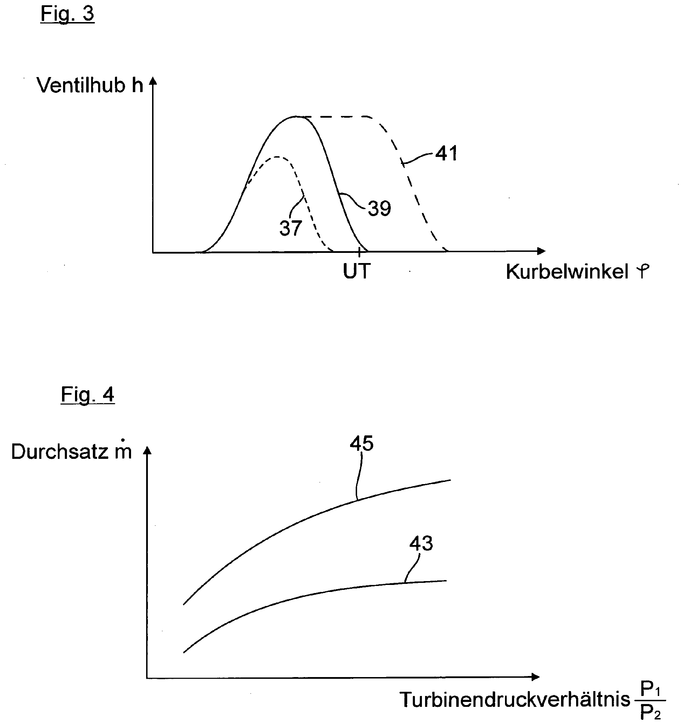

Der Zyklus zur Erhöhung des Wirkungsgrads ist hier dabei durch einen Miller-Zyklus gebildet, bei dem die Einlassventile der Brennkraftmaschine 5 im Vergleich zum Grundzyklus früher geschlossen werden. Bevorzugt werden die Einlassventile der Brennkraftmaschine 5 in dem Miller-Zyklus dabei in einem Kurbellwinkelbereich von 40° bis 5° Kurbelwinkel vor UT geschlossen. Alternativ könnte der Zyklus zur Erhöhung des Wirkungsgrads der Brennkraftmaschine 5 auch durch einen Atkinson-Zyklus gebildet sein, bei dem die Einlassventile der Brennkraftmaschine im Vergleich zum Grundzyklus später schließen. Bevorzugt werden die Einlassventile der Brennkraftmaschine 5 in dem Atkinson-Zyklus dabei in einem Kurbelwinkelbereich von 50° bis 70° Kurbelwinkel nach UT geschlossen. In Fig. 3 ist ein Diagramm gezeigt, mit dem die Unterschiede zwischen dem Grundzyklus, dem Miller-Zyklus und dem Atkinson-Zyklus verdeutlicht werden sollen. Die Kurve 37 zeigt hier dabei einen Ventilhub h eines Einlassventils in Abhängigkeit von dem Kurbelwinkel $\varphi$ einer Kurbelwelle der Brennkraftmaschine 5 bei einem Miller-Zyklus. Die Kurve 39 zeigt den Ventilhub h in Abhängigkeit von dem Kurbelwinkel $\varphi$ bei einem Grundzyklus. Die Kurve 41 zeigt den Ventilhub h in Abhängigkeit von dem Kurbelwinkel $\varphi$ bei einem Atkinson-Zyklus.

Die Durchlassquerschnitt-Stelleinrichtung 25 wird hier ebenfalls in Abhängigkeit von der aktuellen Betriebsweise der Elektromaschine 29 mittels des Steuergeräts 33 gesteuert. Sofern der Verdichter 13 des Abgasturboladers 15 dabei nicht mittels der Elektromaschine 29 angetrieben wird, wird mittels der Durchlassquerschnitt-Stelleinrichtung 25 ein definierter Grund-Durchlassquerschnitt der Abgasturbine 23 eingestellt. Sofern der Verdichter 13 des Abgasturboladers 15 mittels der Elektromaschine 29 angetrieben wird, wird mittels der Durchlassquerschnitt-Stelleinrichtung 25 ein Durchlassquerschnitt der Turbine 23 eingestellt, der in einem definierten Maß größer ist als der Grund-Durchlassquerschnitt. Dadurch kann der Wirkungsgrad der Brennkraftmaschine 5 ebenfalls erhöht werden.

In Fig. 4 ist ein Diagramm gezeigt, aus dem der Unterschied zwischen einem ersten Durchlassquerschnitt und einem größer als der erste Durchlassquerschnitt ausgebildeten zweiten Durchlassquerschnitt der Abgasturbine 23 verdeutlicht wird. Die Kurve 43 zeigt hier dabei einen Durchsatz bzw. Massenstrom $m$ des Abgases 19 durch die Abgasturbine 23 in Abhängigkeit von einem Turbinendruckverhältnis $\frac{p_1}{p_2}$ bei dem ersten eingestellten Durchlass-querschnitt der Abgasturbine 23. Der Druck $p_1$ ist hier dabei der Abgasdruck unmittelbar vor der Abgasturbine 23. Der Druck $p_2$ ist hier dabei der Abgasdruck unmittelbar nach der Abgasturbine 23. Die Kurve 45 zeigt den Durchsatz bzw. Massenstrom m des Abgases 19 durch die Abgasturbine 23 in Abhängigkeit von einem Turbinendruckverhältnis $\frac{p_1}{p_2}$ bei dem zweiten eingestellten Durchlassquerschnitt der Abgasturbine 23.

Des Weiteren wird die Elektromaschine 29 hier in Abhängigkeit von der mittels der Batterie 31 gespeicherten Energiemenge gesteuert. Hierzu ist das Steuergerät 33 signaltechnisch mit der Batterie 31 verbunden, so dass eine Information über die gespeicherte Energiemenge an das Steuergerät 33 übermittelt wird. Optional könnte die Elektromaschine 29 zudem auch in Abhängigkeit von einer mittels einer Abgasrückführung der Brennkraftmaschine 5 aus dem Abgasstrang 19 in den Ansaugtrakt 7 rückgeführten Abgasmenge als weiteren Steuerungsparameter gesteuert werden. Zudem könnte die Elektromaschine 29 optional auch in Abhängigkeit von der Steigung eines aktuellen oder zukünftig mit dem Fahrzeug 1 befahrenen Fahrstreckenabschnitts als weiteren Steuerungsparameter gesteuert werden. Des Weiteren könnte die Elektromaschine 29 auch in Abhängigkeit von der aktuellen Drehzahl der Brennkraftmaschine 5 sowie in Abhängigkeit von dem aktuellen Drehmoment der Brennkraftmaschine 5 mittels des Steuergeräts 33 als weitere Steuerungsparameter gesteuert werden.

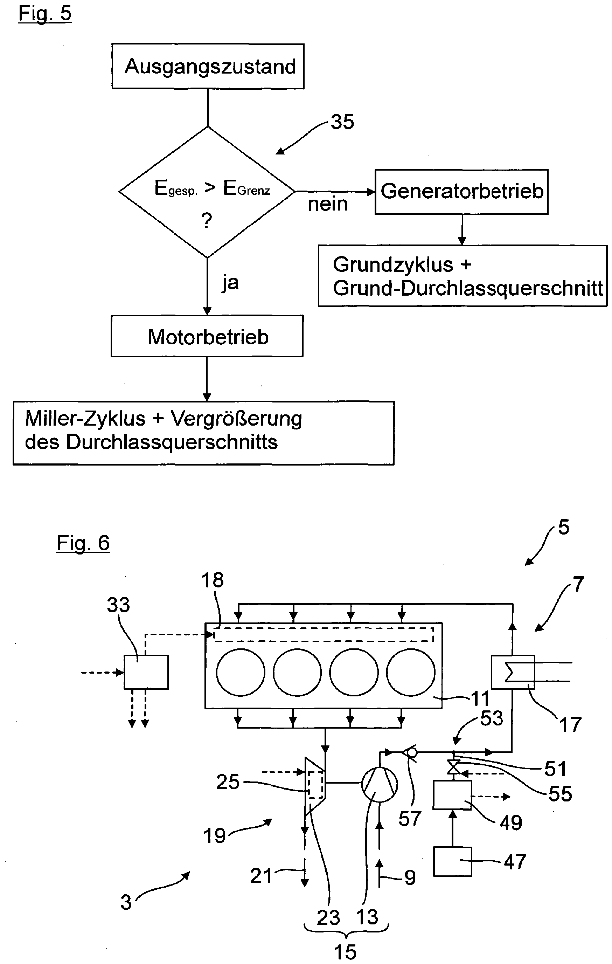

Nachfolgend wird die Steuerung der Elektromaschine 29 in Abhängigkeit von der mittels der Batterie 31 gespeicherten Energiemenge anhand von Fig. 5 näher erläutert:

Ausgehend von einem Ausgangszustand, bei dem die Elektromaschine 29 hier beispielhaft in der Generator-Betriebsweise betrieben wird und somit der Grundzyklus und der Grund-Durchlassquerschnitt eingestellt sind, wird mittels des Steuergeräts 33 zunächst in einem Überprüfungsschritt 35 ermittelt, ob die in der Batterie gespeicherte Energiemenge $E_{gespeichert}$ einen definierten Energiemengen-Grenzwert $E_{Grenz}$ überschreitet. Sofern die in der Batterie 31 gespeicherte Energiemenge $E_{gespeichert}$ den definierten Energiemengen-Grenzwert $E_{Grenz}$ nicht überschreitet, verbleibt die Elektromaschine 29 in dem Generatorbetrieb. Zudem bleiben hier dann auch der Grundzyklus und der Grund-Durchlassquerschnitt eingestellt. Sofern die mittels der Batterie 31 gespeicherte Energiemenge $E_{gespeichert}$ den definierten Energiemengen-Grenzwert $E_{Grenz}$ überschreitet, wird die Elektromaschine 29 in dem Motorbetrieb betrieben, so dass der Verdichter 13 von der Elektromaschine 29 angetrieben und die durch den Ansaugtrakt 7 strömende Verbrennungsluft 9 mittels der in der Batterie 31 gespeicherten Energie verdichtet wird. Zudem wird hier dann auch auf den Miller-Zyklus mittels der Schließzeitpunkt-Stelleinrichtung 18 umgeschaltet, wodurch der Kraftstoffverbrauch der Brennkraftmaschine deutlich verringert wird. Des Weiteren wird hier auch mittels der Durchlassquerschnitt-Stelleinrichtung 25 ein größer als der Grund-Durchlassquerschnitt ausgebildeter Durchlassquerschnitt an der Turbine 23 eingestellt, wodurch der Kraftstoffverbrauch der Brennkraftmaschine ebenfalls verringert wird.

Fig. 6 zeigt ein Beispiel, welches von der beanspruchten Erfindung abweicht. Im Vergleich zu der in Fig. 2 gezeigten Ausführungsform ist hier keine Elektromaschine 29 und keine Batterie 31 vorgesehen. Anstelle dessen weist die Vorrichtung 3 hier einen Luftpresser bzw. Kompressor 47 auf, mittels dem Luft aus der Fahrzeugumgebung verdichtet wird. Der Kompressor 47 ist hier beispielhaft drehmomentübertragend mit der Brennkraftmaschine 5 verbunden ist, so dass der Kompressor 47 mittels der Brennkraftmaschine 5 angetrieben wird. Die mittels des Kompressors 47 verdichtete Luft wird in einem strömungstechnisch mit dem Kompressor 47 verbundenen Druckluft-Behälter 49 als Energie-Speichereinrichtung gespeichert. Der Druckluft-Behälter 49 ist über eine Zuführleitung 51 strömungstechnisch mit dem Ansaugtrakt 7 der Brennkraftmaschine 5 verbunden, über die die in dem Druckluft-Behälter 49 gespeicherte Druckluft an einem Druckluft-Einleitbereich 53 des Ansaugtrakts 7 in den Ansaugtrakt 7 eingeleitet werden kann. Der Druckluft-Einleitbereich 53 ist dabei, in Verbrennungsluft-Strömungsrichtung gesehen, stromab des Verdichters 13 und stromauf des Wärmeübertragers 17 angeordnet. Durch diese Anordnung kann vorverdichtete Druckluft in den Ansaugtrakt 7 eingeleitet werden, wodurch die durch den Ansaugtrakt 7 strömende Verbrennungsluft 9 verdichtet wird.

Die Zuführung der Druckluft in den Ansaugtrakt 7 wird dabei mittels eines der Zuführleitung 51 zugeordneten Steuerventils 55 gesteuert, das signaltechnisch mit dem Steuergerät 33 verbunden ist. Das Steuerventil 55 kann beispielsweise durch ein stufenlos verstellbares Durchlassventil gebildet sein. Zudem ist hier auch, in Verbrennungsluft-Strömungsrichtung gesehen, zwischen dem Verdichter 13 und dem Druckluft-Einleitbereich 53 ein Rückschlagventil 57 angeordnet, mittels dem ein Rückströmen der verdichteten Verbrennungsluft 9 in Richtung des Verdichters 13 verhindert wird.

**Bezugszeichenliste**

| | |
|---|---|
| 1 | Fahrzeug |
| 3 | Vorrichtung |
| 5 | Brennkraftmaschine |
| 7 | Ansaugtrakt |
| 9 | Verbrennungsluft |
| 11 | Zylinderkopf |
| 13 | Verdichter |
| 15 | Abgasturbolader |
| 17 | wärmeabführender Wärmeübertrager |
| 18 | Schließzeitpunkt-Stelleinrichtung |
| 19 | Abgasstrang |
| 21 | Abgas |
| 23 | Turbine |
| 25 | Durchlassquerschnitt-Stelleinrichtung |
| 29 | Elektromaschine |
| 31 | Batterie |
| 33 | Steuergerät |
| 35 | Überprüfungsschritt |
| 37 | Kurve |
| 39 | Kurve |
| 41 | Kurve |
| 43 | Kurve |
| 45 | Kurve |
| 47 | Kompressor |
| 49 | Druckluft-Behälter |
| 51 | Zuführleitung |
| 53 | Druckluft-Einleitbereich |

| 55 | Steuerventil |
| 57 | Rückschlagventil |
| $E_{gespeichert}$ | gespeicherte Energiemenge |
| $E_{Grenz}$ | Energiemengen-Grenzwert |
| h | Ventilhub |
| m | Durchsatz |
| $p_1$ | Druck vor Abgasturbine |
| $p_2$ | Druck nach Abgasturbine |
| φ | Kurbelwinkel |

**Patentansprüche**

1. Verfahren zum Betreiben einer Brennkraftmaschine, insbesondere als Antriebseinrichtung für ein Fahrzeug, wobei wenigstens eine Energie-Speichereinrichtung (31) vorgesehen ist, mittels der Energie gespeichert wird, wobei eine Steuereinrichtung (33) vorgesehen ist, mittels der die gespeicherte Energie in Abhängigkeit von wenigstens einem Steuerungsparameter einer durch einen Ansaugtrakt (7) der Brennkraftmaschine (5) strömenden Verbrennungsluft (9) zugeführt wird, so dass die durch den Ansaugtrakt (7) strömende Verbrennungsluft (9) verdichtet wird, wobei die Brennkraftmaschine (5) einen Abgasturbolader (15) aufweist, wobei mittels der Energie-Speichereinrichtung (31), insbesondere in Abhängigkeit von der aktuellen Betriebssituation der Brennkraftmaschine (5), zumindest ein Teil der Rotationsenergie einer Abgasturbine (23) des Abgasturboladers (15) zwischengespeichert wird, wobei vorgesehen ist, dass zwischen der Abgasturbine (23) und der Energie-Speichereinrichtung (31) eine Elektromaschine (29), insbesondere ein elektrischer Generator, zwischengeschaltet ist, mittels der die mechanische Rotationsenergie der Abgasturbine (23) in elektrische Energie umgewandelt wird, die dann in der, insbesondere als Batterie ausgebildeten, Energie-Speichereinrichtung (31) gespeichert wird, wobei eine Schließzeitpunkt-Stelleinrichtung (18) vorgesehen ist, mittels der der Schließzeitpunkt des wenigstens einen Einlassventils der Brennkraftmaschine (5) verstellbar ist, wobei, sofern die Verbrennungsluft (9) nicht mittels der zwischengespeicherten Energie verdichtet wird, mittels der Schließzeitpunkt-Stelleinrichtung (18) ein Grundzyklus der Brennkraftmaschine (5) eingestellt wird, in dem das wenigstens eine Einlassventil der Brennkraftmaschine (5) in einem Kurbelwinkelbereich von 1° bis 40° Kurbelwinkel, insbesondere von 10° bis 40° Kurbelwinkel, nach UT (unterer Totpunkt) schließt, wobei, sofern die Verbrennungsluft (9) mittels der zwischengespeicherten Energie verdichtet wird, zur Erhöhung des Wirkungsgrads der Brennkraftmaschine (5) mittels der Schließzeitpunkt-Stelleinrichtung ein Zyklus der Brennkraftmaschine (5) eingestellt wird, in dem das wenigstens eine Einlassventil der Brennkraftmaschine (5) im Vergleich zum Grundzyklus früher oder später schließt, wobei der Steuerungsparameter durch die mittels der Energie-Speichereinrichtung (31 gespeicherte Energiemenge ($E_{gespeichert}$) gebildet ist, wobei, sofern die mittels der Energie-Speichereinrichtung (31) gespeicherte Energiemenge ($E_{gespeichert}$) einen definierten Energiemengen-Grenzwert ($E_{Grenz}$) nicht überschreitet, die Verbrennungsluft (9) nicht mittels der zwischengespeicherten Energie verdichtet wird, und wobei, sofern die mittels der Energie-Speichereinrichtung gespeicherte Energiemenge ($E_{gespeichert}$) den definierten Energiemengen-Grenzwert ($E_{Grenz}$) überschreitet, die Verbrennungsluft (9) mittels der zwischengespeicherten Energie verdichtet wird.

2. Verfahren nach Anspruch 1, **dadurch gekennzeichnet, dass** ein zusätzlicher Steuerungsparameter durch die aktuelle Drehzahl der Brennkraftmaschine (5) und/oder durch das aktuelle Drehmoment der Brennkraftmaschine (5) und/oder durch die mittels einer, insbesondere externen, Abgasrückführung der Brennkraftmaschine (5) in den Ansaugtrakt (7) rückgeführte Abgasmenge gebildet ist.

3. Verfahren nach Anspruch 1 oder 2, **dadurch gekennzeichnet, dass** die Brennkraftmaschine (5) als Antriebseinrichtung zum Antreiben eines Fahrzeugs (1) ausgebildet ist, wobei eine Steigungs-Ermittlungseinrichtung vorgesehen ist, mittels der die Steigung eines aktuell und/oder zukünftig mit dem Fahrzeug (1) befahrenen Fahrstreckenabschnitts ermittelbar ist, und wobei der wenigstens eine Steuerungsparameter durch die ermittelte Steigung des aktuell und/oder zukünftig mit dem Fahrzeug (1) befahrenen Fahrstreckenabschnitts gebildet ist.

4. Verfahren nach einem der vorhergehenden Ansprüche, **dadurch gekennzeichnet, dass** mittels der Energie-Speichereinrichtung (31) durch eine, insbesondere fahrzeugseitige, Energie-Rückgewinnungseinrichtung rückgewonnene und/oder erzeugte, insbesondere elektrische, Energie zwischengespeichert wird, wobei bevorzugt vorgesehen ist, dass die Energie-Rückgewinnungseinrichtung durch eine Rekuperationsbremse eines die Brennkraftmaschine (5) aufweisenden Fahrzeugs (1) gebildet ist.

5. Verfahren nach einem der vorhergehenden Ansprüche, **dadurch gekennzeichnet, dass** ein Verdichter (13) des Abgasturboladers (15) mittels der zwischengespeicherten Energie antreibbar ist, wobei bevorzugt vorgesehen ist, dass die Steuereinrichtung (33) zum Antreiben des Verdichters (13) eine mittels der zwischengespeicherten elektrischen Energie betriebene Elektromaschine (29), insbesondere einen Elektromotor, aufweist.

6. Verfahren nach einem der vorhergehenden Ansprüche, **dadurch gekennzeichnet, dass** der Zyklus zur Erhöhung des Wirkungsgrads der Brennkraftmaschine (5) durch einen Miller-Zyklus gebildet ist, wobei bevorzugt vorgesehen ist, dass in dem Miller-Zyklus das wenigstens eine Einlassventil der Brennkraftmaschine (5) in einem Kurbelwinkelbereich von 40° bis 5° Kurbelwinkel vor UT schließt.

7. Verfahren nach einem der vorhergehenden Ansprüche, **dadurch gekennzeichnet, dass** der Zyklus zur Erhöhung des Wirkungsgrads der Brennkraftmaschine (5) durch einen Atkinson-Zyklus gebildet ist, wobei bevorzugt vorgesehen ist, dass in dem Atkinson-Zyklus das wenigstens eine Einlassventil der Brennkraftmaschine (5) in einem Kurbelwinkelbereich von 50° bis 70° Kurbelwinkel nach UT schließt.

8. Verfahren nach einem der vorhergehenden Ansprüche, **dadurch gekennzeichnet, dass** die Schließzeitpunkt-Stelleinrichtung (18) durch eine Nockenverstellung und/oder durch eine Nockenwellenverstellung gebildet ist.

9. Verfahren nach einem der vorhergehenden Ansprüche, **dadurch gekennzeichnet, dass** eine Durchlassquerschnitt-Stelleinrichtung (25) vorgesehen ist, mittels der der Durchlassquerschnitt einer Turbine (23) des Abgasturboladers (15) der Brennkraftmaschine (5) verstellbar ist, wobei, sofern die Verbrennungsluft (9) nicht mittels der zwischengespeicherten Energie verdichtet wird, mittels der Durchlassquerschnitt-Stelleinrichtung (25) ein definierter Grund-Durchlassquerschnitt der Turbine (23) eingestellt wird, wobei, sofern die Verbrennungsluft (9) mittels der zwischengespeicherten Energie verdichtet wird, mittels der Durchlassquerschnitt-Stelleinrichtung (25) ein Durchlassquerschnitt der Turbine (23) eingestellt wird, der in einem definierten Maß größer ist als der Grund-Durchlassquerschnitt.

10. Verfahren nach Anspruch 9, **dadurch gekennzeichnet, dass** die Durchlassquerschnitt-Stelleinrichtung (25) durch eine Einrichtung zur Verstellung einer Turbinengeometrie der Abgasturbine gebildet ist.

11. Vorrichtung, insbesondere zur Durchführung eines Verfahrens nach einem der vorhergehenden Ansprüche, mit einer Brennkraftmaschine, insbesondere als Antriebseinrichtung für ein Fahrzeug, wobei wenigstens eine Energie-Speichereinrichtung (31) vorgesehen ist, mittels der Energie speicherbar ist, wobei eine Steuereinrichtung (33) vorgesehen ist, mittels der die gespeicherte Energie in Abhängigkeit von wenigstens einem Steuerungsparameter einer durch einen Ansaugtrakt (7) der Brennkraftmaschine (5) strömenden Verbrennungsluft (9) zuführbar ist, so dass die durch den Ansaugtrakt (7) strömenden Verbrennungsluft (9) verdichtet wird, wobei die Brennkraftmaschine (5) einen Abgasturbolader (15) aufweist, wobei mittels der Energie-Speichereinrichtung (31), insbesondere in Abhängigkeit von der aktuellen Betriebssituation der Brennkraftmaschine (5), zumindest ein Teil der Rotationsenergie einer Abgasturbine (23) des Abgasturboladers (15) zwischengespeichert ist, wobei vorgesehen ist, dass zwischen der Abgasturbine (23) und der Energie-Speichereinrichtung (31) eine Elektromaschine (29), insbesondere ein elektrischer Generator, zwischengeschaltet ist, mittels der die mechanische Rotationsenergie der Abgasturbine (23) in elektrische Energie umwandelbar ist, die dann in der, insbesondere als Batterie ausgebildeten, Energie-Speichereinrichtung (31) speicherbar ist. wobei eine Schließzeitpunkt-Stelleinrichtung (18) vorgesehen ist, mittels der der Schließzeitpunkt des wenigstens einen Einlassventils der Brennkraftmaschine (5) verstellbar ist, wobei, sofern die Verbrennungsluft (9) nicht mittels der zwischengespeicherten Energie verdichtet wird, mittels der Schließzeitpunkt-Stelleinrichtung (18) ein Grundzyklus der Brennkraftmaschine (5) eingestellt wird, in dem das wenigstens eine Einlassventil der Brennkraftmaschine (5) in einem Kurbelwinkelbereich von 1° bis 40° Kurbelwinkel, insbesondere von 10° bis 40° Kurbelwinkel, nach UT (unterer Totpunkt) schließt, wobei, sofern die Verbrennungsluft (9) mittels der zwischengespeicherten Energie verdichtet wird, zur Erhöhung des Wirkungsgrads der Brennkraftmaschine (5) mittels der Schließzeitpunkt-Stelleinrichtung ein Zyklus der Brennkraftmaschine (5) eingestellt wird, in dem das wenigstens eine Einlassventil der Brennkraftmaschine (5) im Vergleich zum Grundzyklus früher oder später schließt, wobei der Steuerungsparameter durch die mittels der Energie-Speichereinrichtung (31 gespeicherte Energiemenge ($E_{gespeichert}$) gebildet ist, wobei, sofern die mittels der Energie-Speichereinrichtung (31) gespeicherte Energiemenge ($E_{gespeichert}$) einen definierten Energiemengen-Grenzwert ($E_{Grenz}$) nicht überschreitet, die Verbrennungsluft (9) nicht mittels der zwischengespeicherten Energie verdichtet wird, und wobei, sofern die mittels der Energie-Speichereinrichtung gespeicherte Energiemenge

($E_{gespeichert}$) den definierten Energiemengen-Grenzwert ($E_{Grenz}$) überschreitet, die Verbrennungsluft (9) mittels der zwischengespeicherten Energie verdichtet wird.

12. Fahrzeug, insbesondere Nutzfahrzeug, mit einer Vorrichtung nach Anspruch 11.

**Claims**

1. Method for operating an internal combustion engine, in particular as a drive device for a vehicle, wherein at least one energy store device (31) is provided by means of which energy is stored, wherein a control device (33) is provided by means of which the stored energy is, in a manner dependent on at least one control parameter, fed to combustion air (9) flowing through an intake tract (7) of the internal combustion engine (5), such that the combustion air (9) flowing through the intake tract (7) is compressed, wherein the internal combustion engine (5) has an exhaust-gas turbocharger (15), wherein, by means of the energy store device (31), in particular in a manner dependent on the present operating situation of the internal combustion engine (5), at least a proportion of the rotational energy of the exhaust-gas turbine (23) of the exhaust-gas turbocharger (15) is temporarily stored, wherein provision is made whereby an electric machine (29), in particular an electrical generator, is interconnected between the exhaust-gas turbine (23) and the energy store device (31), by means of which electric machine the mechanical rotational energy of the exhaust-gas turbine (23) is converted into electrical energy, which is then stored in the energy store device (31), which is in particular designed as a battery, wherein a closing time setting device (18) is provided by means of which the closing time of the at least one inlet valve of the internal combustion engine (5) is adjustable, wherein, if the combustion air (9) is not compressed by means of the temporarily stored energy, a basic cycle of the internal combustion engine (5) in which the at least one inlet valve of the internal combustion engine (5) closes in a crank angle range from 1° to 40° crank angle, in particular from 10° to 40° crank angle, after BDC (bottom dead centre) is set by means of the closing time setting device (18), wherein, if the combustion air (9) is compressed by means of the temporarily stored energy, a cycle of the internal combustion engine (5) in which the at least one inlet valve of the internal combustion engine (5) closes earlier or later in relation to the basic cycle is set by means of the closing time setting device in order to increase the efficiency of the internal combustion engine (5), wherein the control parameter is formed by the energy quantity ($E_{stored}$) stored by means of the energy store device (31),
wherein, if the energy quantity ($E_{stored}$) stored by means of the energy store device (31) does not exceed a defined energy quantity threshold value ($E_{threshold}$), the combustion air (9) is not compressed by means of the temporarily stored energy, and wherein, if the energy quantity ($E_{stored}$) stored by means of the energy store device exceeds the defined energy quantity threshold value ($E_{threshold}$), the combustion air (9) is compressed by means of the temporarily stored energy.

2. Method according to Claim 1, **characterized in that** an additional control parameter is formed by the present rotation speed of the internal combustion engine (5) and/or by the present torque of the internal combustion engine (5) and/or by the exhaust-gas quantity recirculated into the intake tract (7) by means of an, in particular external, exhaust-gas recirculation arrangement of the internal combustion engine (5).

3. Method according to Claim 1 or 2, **characterized in that** the internal combustion engine (5) is designed as a drive device for driving a vehicle (1), wherein a gradient determining device is provided by means of which the gradient of a roadway section presently being travelled on and/or to be travelled on in the future by the vehicle (1) can be determined, and wherein the at least one control parameter is formed by the determined gradient of the roadway section presently being travelled on and/or to be travelled on in the future by the vehicle (1).

4. Method according to any of the preceding claims, **characterized in that** in particular electrical energy recovered and/or generated by an energy recovery device, situated in particular on board the vehicle, is temporarily stored by means of the energy store device (31), wherein provision is preferably made whereby the energy recovery device is formed by a recuperation brake of a vehicle (1) which has the internal combustion engine (5).

5. Method according to any of the preceding claims, **characterized in that** a compressor (13) of the exhaust-gas turbocharger (15) can be driven by means of the temporarily stored energy, wherein provision is preferably made whereby the control device (33) has, for driving the compressor (13), an electric machine (29) operated by means of the temporarily stored electrical energy, in particular an electric motor.

6. Method according to any of the preceding claims, **characterized in that** the cycle for increasing the efficiency of the internal combustion engine (5) is formed by a Miller cycle, wherein provision is preferably made whereby, in the Miller cycle, the at least one inlet valve of the internal combustion engine (5) closes in a crank angle range from 40° to 5° crank angle before BDC.

7. Method according to any of the preceding claims, **characterized in that** the cycle for increasing the efficiency of the internal combustion engine (5) is formed by an Atkinson cycle, wherein provision is preferably made whereby, in the Atkinson cycle, the at least one inlet valve of the internal combustion engine (5) closes in a crank angle range from 50° to 70° crank angle after BDC.

8. Method according to any of the preceding claims, **characterized in that** the closing time setting device (18) is formed by a cam adjustment means and/or by a camshaft adjustment means.

9. Method according to any of the preceding claims, **characterized in that** a passage cross section setting device (25) is provided by means of which the passage cross section of a turbine (23) of the exhaust-gas turbocharger (15) of the internal combustion engine (5) is adjustable, wherein, if the combustion air (9) is not compressed by means of the temporarily stored energy, a defined basic passage cross section of the turbine (23) is set by means of the passage cross section setting device (25), wherein, if the combustion air (9) is compressed by means of the temporarily stored energy, a passage cross section of the turbine (23) which is larger to defined extent than the basic passage cross section is set by means of the passage cross section setting device (25).

10. Method according to Claim 9, **characterized in that** the passage cross section setting device (25) is formed by a device for adjusting a turbine geometry of the exhaust-gas turbine.

11. Apparatus, in particular for carrying out the method according to any of the preceding claims, having an internal combustion engine, in particular as a drive device for a vehicle, wherein at least one energy store device (31) is provided by means of which energy can be stored, wherein a control device (33) is provided by means of which the stored energy can, in a manner dependent on at least one control parameter, be fed to combustion air (9) flowing through an intake tract (7) of the internal combustion engine (5), such that the combustion air (9) flowing through the intake tract (7) is compressed, wherein the internal combustion engine (5) has an exhaust-gas turbocharger (15), wherein, by means of the energy store device (31), in particular in a manner dependent on the present operating situation of the internal combustion engine (5), at least a proportion of the rotational energy of the exhaust-gas turbine (23) of the exhaust-gas turbocharger (15) is temporarily stored, wherein provision is made whereby an electric machine (29), in particular an electrical generator, is interconnected between the exhaust-gas turbine (23) and the energy store device (31), by means of which electric machine the mechanical rotational energy of the exhaust-gas turbine (23) can be converted into electrical energy, which can then be stored in the energy store device (31), which is in particular designed as a battery, wherein a closing time setting device (18) is provided by means of which the closing time of the at least one inlet valve of the internal combustion engine (5) is adjustable, wherein, if the combustion air (9) is not compressed by means of the temporarily stored energy, a basic cycle of the internal combustion engine (5) in which the at least one inlet valve of the internal combustion engine (5) closes in a crank angle range from 1° to 40° crank angle, in particular from 10° to 40° crank angle, after BDC (bottom dead centre) is set by means of the closing time setting device (18), wherein, if the combustion air (9) is compressed by means of the temporarily stored energy, a cycle of the internal combustion engine (5) in which the at least one inlet valve of the internal combustion engine (5) closes earlier or later in relation to the basic cycle is set by means of the closing time setting device in order to increase the efficiency of the internal combustion engine (5), wherein the control parameter is formed by the energy quantity ($E_{stored}$) stored by means of the energy store device (31), wherein, if the energy quantity ($E_{stored}$) stored by means of the energy store device (31) does not exceed a defined energy quantity threshold value ($E_{threshold}$), the combustion air (9) is not compressed by means of the temporarily stored energy, and wherein, if the energy quantity ($E_{stored}$) stored by means of the energy store device exceeds the defined energy quantity threshold value ($E_{threshold}$), the combustion air (9) is compressed by means of the temporarily stored energy.

12. Vehicle, in particular utility vehicle, having an apparatus according to Claim 11.

**Revendications**

1. Procédé d'exploitation d'un moteur à combustion interne, en particulier en tant que dispositif d'entraînement pour un véhicule, au moins un dispositif de stockage d'énergie (31) étant prévu qui permet de stocker de l'énergie, un dispositif de commande (33) étant prévu qui permet d'amener l'énergie stockée en fonction d'au moins un paramètre de commande à un air de combustion (9) passant par un collecteur d'admission (7) du moteur à combustion interne (5) de sorte que l'air de combustion (9) passant par le collecteur d'admission (7) est comprimé,

dans lequel le moteur à combustion interne (5) présente un turbocompresseur (15), le dispositif de stockage d'énergie (31) permettant de stocker provisoirement, en particulier en fonction de la situation de fonctionnement actuelle du moteur à combustion interne (5), au moins une partie de l'énergie de rotation d'une turbine à gaz d'échappement (23) du turbocompresseur (15), dans lequel il est prévu qu'entre la turbine à gaz d'échappement (23) et le dispositif de stockage d'énergie (31) une machine électrique (29), en particulier un générateur électrique, est interposée, qui permet de transformer l'énergie de rotation mécanique de la turbine à gaz d'échappement (23) en énergie électrique qui est ensuite stockée dans le dispositif de stockage d'énergie (31), réalisé en particulier sous forme de batterie,

dans lequel un dispositif de réglage d'instant de fermeture (18) est prévu qui permet de régler l'instant de fermeture de ladite au moins une soupape d'admission du moteur à combustion interne (5), dans lequel, dans la mesure où l'air de combustion (9) n'est pas comprimé au moyen de l'énergie stockée provisoirement, le dispositif de réglage d'instant de fermeture (18) règle un cycle de base du moteur à combustion interne (5) au cours duquel ladite au moins une soupape d'admission du moteur à combustion interne (5) se ferme dans une plage d'angles de vilebrequin entre 1° et 40° d'angle de vilebrequin, en particulier entre 10° et 40° d'angle de vilebrequin, après le PMB (point mort bas), dans lequel, dans la mesure où l'air de combustion (9) est comprimé au moyen de l'énergie stockée provisoirement pour augmenter le rendement du moteur à combustion interne (5) le dispositif de réglage d'instant de fermeture règle un cycle du moteur à combustion interne (5) au cours duquel ladite au moins une soupape d'admission du moteur à combustion interne (5) se ferme plus tôt ou plus tard en comparaison avec le cycle de base,

dans lequel le paramètre de commande est la quantité d'énergie ($E_{gespeichert}$) stockée au moyen du dispositif de stockage d'énergie (31),

dans lequel, dans la mesure où la quantité d'énergie ($E_{gespeichert}$) stockée au moyen du dispositif de stockage d'énergie (31) ne dépasse pas une valeur seuil de quantité d'énergie ($E_{Grenz}$), l'air de combustion (9) n'est pas comprimé au moyen de l'énergie stockée provisoirement, et dans lequel, dans la mesure où la quantité d'énergie ($E_{gespeichert}$) stockée au moyen du dispositif de stockage d'énergie dépasse la valeur seuil de quantité d'énergie ($E_{Grenz}$) définie, l'air de combustion (9) est comprimé au moyen de l'énergie stockée provisoirement.

2. Procédé selon la revendication 1, **caractérisé en ce qu'**un paramètre de commande supplémentaire est le régime actuel du moteur à combustion interne (5) et/ou le couple actuel du moteur à combustion interne (5) et/ou la quantité de gaz d'échappement ramenée dans le collecteur d'admission (7) au moyen d'une recirculation de gaz d'échappement, en particulier externe, du moteur à combustion interne (5).

3. Procédé selon la revendication 1 ou 2, **caractérisé en ce que** le moteur à combustion interne (5) est réalisé en tant que dispositif d'entraînement pour entraîner un véhicule (1), dans lequel un dispositif de détermination de pente est prévu qui permet de déterminer la pente d'un tronçon de route parcouru par le véhicule (1) actuellement et/ou à l'avenir, et ledit au moins un paramètre de commande étant la pente déterminée du tronçon de route parcouru par le véhicule (1) actuellement et/ou à l'avenir.

4. Procédé selon l'une quelconque des revendications précédentes, **caractérisé en ce que** le dispositif de stockage d'énergie (31) permet de stocker provisoirement de l'énergie, en particulier électrique, récupérée et/ou générée par un dispositif de récupération d'énergie, en particulier côté véhicule, dans lequel il est prévu de préférence que le dispositif de récupération d'énergie est formé par un frein de récupération d'un véhicule (1) présentant le moteur à combustion interne (5).

5. Procédé selon l'une quelconque des revendications précédentes, **caractérisé en ce qu'**un compresseur (13) du turbocompresseur (15) peut être entraîné par l'énergie stockée provisoirement, dans lequel il est prévu de préférence que le dispositif de commande (33) présente une machine électrique (29), en particulier un moteur électrique, entraînée au moyen de l'énergie électrique stockée provisoirement, pour entraîner le compresseur (13).

6. Procédé selon l'une quelconque des revendications précédentes, **caractérisé en ce que** le cycle destiné à augmenter le rendement du moteur à combustion interne (5) est formé par un cycle Miller, dans lequel il est prévu de préférence que dans le cycle Miller, au moins une soupape d'admission du moteur à combustion interne (5) se ferme dans une plage d'angles de vilebrequin entre 40° et 5° d'angle de vilebrequin avant le PMB.

7. Procédé selon l'une quelconque des revendications précédentes, **caractérisé en ce que** le cycle pour augmenter le rendement du moteur à combustion interne (5) est formé par un cycle Atkinson, dans lequel il est prévu de préférence que dans le cycle Atkinson, ladite au moins une soupape d'admission du moteur à combustion interne (5) se ferme dans une plage d'angles de vilebrequin entre 50° et 70° d'angle de vilebrequin après le PMB.

8. Procédé selon l'une quelconque des revendications précédentes, **caractérisé en ce que** le dispositif de réglage d'instant de fermeture (18) est formé par un ajustement de came et/ou par un ajustement d'arbre à cames.

9. Procédé selon l'une quelconque des revendications précédentes, **caractérisé en ce qu'**un dispositif de réglage de section de passage (25) est prévu qui permet de régler la section de passage d'une turbine (23) du turbocompresseur (15) du moteur à combustion interne (5), dans lequel, dans la mesure où l'air de combustion (9) n'est pas comprimé au moyen de l'énergie stockée provisoirement, le dispositif de réglage de section de passage (25) règle une section de passage de base définie de la turbine (23), dans lequel, dans la mesure où l'air de combustion (9) est comprimé au moyen de l'énergie stockée provisoirement, le dispositif de réglage de section de passage (25) règle une section de passage de la turbine (23) qui est plus grande que la section transversale de base dans une proportion définie.

10. Procédé selon la revendication 9, **caractérisé en ce que** le dispositif de réglage de section de passage (25) est formé par un dispositif permettant de régler une géométrie de turbine de la turbine à gaz d'échappement.

11. Dispositif, destiné en particulier à effectuer un procédé selon l'une quelconque des revendications précédentes, comprenant un moteur à combustion interne, en particulier en tant que dispositif d'entraînement pour un véhicule, au moins un dispositif de stockage d'énergie (31) étant prévu qui permet de stocker de l'énergie, un dispositif de commande (33) étant prévu qui permet d'amener l'énergie stockée en fonction d'au moins un paramètre de commande à un air de combustion (9) passant par un collecteur d'admission (7) du moteur à combustion interne (5) de sorte que l'air de combustion (9) passant par le collecteur d'admission (7) est comprimé, dans lequel le moteur à combustion interne (5) présente un turbocompresseur (15), le dispositif de stockage d'énergie (31) permettant de stocker provisoirement, en particulier en fonction de la situation de fonctionnement actuelle du moteur à combustion interne (5), au moins une partie de l'énergie de rotation d'une turbine à gaz d'échappement (23) du turbocompresseur (15), dans lequel il est prévu qu'entre la turbine à gaz d'échappement (23) et le dispositif de stockage d'énergie (31) une machine électrique (29), en particulier un générateur électrique, est interposée, qui permet de transformer l'énergie de rotation mécanique de la turbine à gaz d'échappement (23) en énergie électrique qui peut ensuite être stockée dans le dispositif de stockage d'énergie (31), réalisé en particulier sous forme de batterie,
dans lequel un dispositif de réglage d'instant de fermeture (18) est prévu qui permet de régler l'instant de fermeture de ladite au moins une soupape d'admission du moteur à combustion interne (5), dans lequel, dans la mesure où l'air de combustion (9) n'est pas comprimé au moyen de l'énergie stockée provisoirement, le dispositif de réglage d'instant de fermeture (18) règle un cycle de base du moteur à combustion interne (5) au cours duquel ladite au moins une soupape d'admission du moteur à combustion interne (5) se ferme dans une plage d'angles de vilebrequin entre 1° et 40° d'angle de vilebrequin, en particulier entre 10° et 40° d'angle de vilebrequin, après le PMB (point mort bas), dans lequel, dans la mesure où l'air de combustion (9) est comprimé au moyen de l'énergie stockée provisoirement pour augmenter le rendement du moteur à combustion interne (5), le dispositif de réglage d'instant de fermeture règle un cycle du moteur à combustion interne (5) au cours duquel ladite au moins une soupape d'admission du moteur à combustion interne (5) se ferme plus tôt ou plus tard en comparaison avec le cycle de base,
dans lequel le paramètre de commande est la quantité d'énergie ($E_{gespeichert}$) stockée au moyen du dispositif de stockage d'énergie (31),
dans lequel, dans la mesure où la quantité d'énergie ($E_{gespeichert}$) stockée au moyen du dispositif de stockage d'énergie (31) ne dépasse pas une valeur seuil de quantité d'énergie ($E_{Grenz}$), l'air de combustion (9) n'est pas comprimé au moyen de l'énergie stockée provisoirement, et dans lequel, dans la mesure où la quantité d'énergie ($E_{gespeichert}$) stockée au moyen du dispositif de stockage d'énergie dépasse la valeur seuil de quantité d'énergie ($E_{Grenz}$) définie, l'air de combustion (9) est comprimé au moyen de l'énergie stockée provisoirement.

12. Véhicule, en particulier véhicule utilitaire, comprenant un dispositif selon la revendication 11.

Fig. 1

Fig. 2

Fig. 3

Fig. 4

Fig. 5

```
        ┌─────────────────────┐
        │   Ausgangszustand   │
        └─────────────────────┘
                   │
                   │              ╱ 35
                   ▼
              ╱─────────╲
            ╱             ╲
          ╱  E_gesp. > E_Grenz ╲        ┌─────────────────────┐
         ⟨        ?        ⟩────nein───▶│   Generatorbetrieb  │
          ╲             ╱               └─────────────────────┘
            ╲         ╱                            │
              ╲─────╱                              ▼
                 │                  ┌──────────────────────────────┐
                 │ ja               │  Grundzyklus +               │
                 ▼                  │  Grund-Durchlassquerschnitt  │
        ┌─────────────────────┐     └──────────────────────────────┘
        │    Motorbetrieb     │
        └─────────────────────┘
                   │
                   ▼
     ┌──────────────────────────────────┐
     │  Miller-Zyklus + Vergrößerung     │
     │  des Durchlassquerschnitts        │
     └──────────────────────────────────┘
```

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012312014 A1